## Europäisches Patentamt

## European Patent Office

## Office européen des brevets

(11) Veröffentlichungsnummer: **0 157 305**
**B1**

## EUROPÄISCHE PATENTSCHRIFT

(45) Veröffentlichungstag der Patentschrift: **11.07.90**

(51) Int. Cl.⁵: **G 05 D 13/62**

(21) Anmeldenummer: **85103335.7**

(22) Anmeldetag: **21.03.85**

(54) Schaltungsanordnung zur Drehzahlregelung eines elektronisch kommutierten Motors.

(30) Priorität: **02.04.84 DE 3412235**

(43) Veröffentlichungstag der Anmeldung:
**09.10.85 Patentblatt 85/41**

(45) Bekanntmachung des Hinweises auf die
Patenterteilung:
**11.07.90 Patentblatt 90/28**

(84) Benannte Vertragsstaaten:
**AT CH DE FR IT LI SE**

(56) Entgegenhaltungen:
**EP-A-0 065 927**
**EP-A-0 088 626**
**DE-A-2 801 520**

(73) Patentinhaber: **Siemens Aktiengesellschaft**
**Wittelsbacherplatz 2**
**D-8000 München 2 (DE)**

(72) Erfinder: **Altendorf, Hans-Walter**
**Im Neusatz 4a**
**D-6520 Worms (DE)**

Courier Press, Leamington Spa, England.

**Beschreibung**

Die Erfindung betrifft einen elektronisch kommutierten Motor, insbesondere Kleinstmotor für den Antrieb zahnärztlicher Werkzeuge, mit einer Schaltungsanordnung, welche aus den vorhandenen Kommutierungssignalen eine Regelgröße zur Drehzahlregelung des Motors innerhalb eines relativ großen Drehzahlbereiches ableitet.

Zur Drehzahlregelung von elektronisch kommutierten Motoren ist es bekannt, entweder zusätzliche Drehzahlerfassungseinrichtungen, wie z.B. Tachogeneratoren oder opto-elektronische bzw. induktive Impulsgeber, vorzusehen, die über eine entsprechende Ansteuerschaltung die Drehzahl des Motors innerhalb eines bestimmten Drehzahlbereiches regeln. Solche zusätzlichen Einrichtungen erhöhen den Schaltungs- und Fertigungsaufwand des Motors. Ein weiterer Nachteil der bekannten Schaltungsanordnung ist darin zu sehen, daß jeweils absolute, der Drehzahl analoge elektrische Größen gewonnen werden, die insbesondere bei großen Drehzahlbereichen bzw. Drehzahlverhältnissen von z.B. 800 bis 100.000 Upm, wie sie bei zahnärztlichen Antrieben gefordert werden, keine vernünftige Auswertung mehr ermöglichen. Die bekannten Schaltungsanordnungen würden unter solchen extremen Verhältnissen relativ störanfällig arbeiten.

Bei Gleichstrommotoren mit mechanischer Kommutierung, also mit Kollektor- und Bürstenanordnung, ist es bekannt (EP-A-0 065 927), auf die Motorwelle eine Scheibe drehfest aufzusetzen, auf der sich in gleichmäßig über den Umfang verteilten Abständen zwei auf verschiedenen Radien liegende Schlitzreihen befinden, durch die bei Drehung der Motorwelle von einer optoelektronischen Abtastung ausgesandtes Licht in zeitlicher Folge der vorbeibewegten Schlitze gemessen wird. Die beiden Schlitzreihen erzeugen zwei Rechtecksignale, von denen das eine den Istwert der Motordrehzahl bildet und das andere der Drehrichtungserkennung dient. Mit der ansteigenden Flanke des einen Rechtecksignals werden Motorsteuersignale erzeugt, die jeweils Startsignale für einen Regelzyklus sind, von welchem zwei Hilfssignale abgeleitet werden, die durch die Zählflanke des Rechtecksignals über eine getrennte Schaltung abgerufen werden. Die zeitliche Lage der Zählflanke bestimmt dabei den Istwert. Das eine Hilfssignal wertet den Istwert aus, indem die Pausenzeit innerhalb eines Pausenzeitzählers für den nächsten Regelzyklus vergrößert oder verkleinert abgespeichert wird, während das zweite Hilfssignal einen Soll- bzw. Istwertzähler jeweils wieder auf den Zählwert Null zurücksetzt.

Bei Änderung der Motordrehzahl ändert sich auch die Periodendauer, die den Istwert darstellt. Ergibt sich beispielsweise ein Ist-Zählwert, der kleiner ist als der Soll-Zählwert, läuft der Motor zu langsam und muß beschleunigt werden. Für den Fall eines größeren Ist-Zählwertes läuft der Motor zu schnell und muß verlangsamt werden. Die bekannte Schaltungsanordnung ist ausschließlich dazu geeignet, den Motor in bezug auf eine bestimmte Drehzahl zu regeln. Eine Änderung der Drehzahl bzw. des Drehzahlbereiches ist mit dieser Schaltung nicht möglich, da eine solche Drehzahländerung zu einem Überlauf des Zählerspeichers führen würde. Die Schaltung ist demnach nicht geeignet, die Drehzahl innerhalb eines relativ großen Drehzahlbereiches ändern zu können. Sie ist auch nicht geeignet, ohne weiteres bei einem elektronisch kommutierten Motor eingesetzt zu werden.

Aus der GB-A-1 344 299 ist ein kollektorloser Gleichstrommotor bekannt, der eine Anlaufhilfseinrichtung enthält, die nach Hochlauf des Motors unwirksam wird. Die Steuerung der Kommutierung erfolgt bei diesem Motor durch die in Teilwicklungssträngen der Ständerwicklung induzierte Spannung, welche außerdem als Istwertspannung für einen Drehzahlregelkreis ausgekoppelt ist, wozu entsprechende Auskoppeltransistoren vorhanden sind. Diese dienen somit sowohl zur Steuerung der Kommutierung als auch zur Gewinnung des Drehzahl-Istwertes. Motoren, bei denen die EMK in zeitweise stromlosen Motorwicklungen gemessen wird, scheiden wegen des zu schlechten Leistungsverhältnisses (Leistung/ Bauvolumen) insbesondere bei Anwendung der Schaltungsanordnung im Dentalbereich, wo man die Motoren im Durchmesser extrem klein, dagegen die Leistung relativ groß haben möchte, weitgehend aus.

Ziel der vorliegenden Erfindung ist es, eine Schaltungsanordnung zur Drehzahlregelung eines elektronisch kommutierten Motors anzugeben, mit der die vorgenannten Nachteile vermieden werden können, d.h. die Schaltungsanordnung soll, ohne daß im Motor zusätzliche Einrichtungen vorgesehen zu werden brauchen, über einen möglichst großen Drehzahlregelbereich zuverlässig arbeiten.

Zur Erreichung dieses Zieles wird erfindungsgemäß vorgeschlagen, daß eine Einrichtung vorhanden ist, welche aus wenigstens einem der vorhandenen Kommutierungssignale pro Läuferumdrehung ein Impulspaar erzeugt, wobei die Zeitspanne zwischen dem zweiten Impuls eines Impulspaares und dem ersten Impuls des darauffolgenden Impulspaares dem Istwert der Motordrehzahl entspricht, daß ein Integrator vorhanden ist, dem einerseits eine von einem Geber vorgegebene und dem Sollwert der Motordrehzahl entsprechende elektrische Größe und andererseits der zweite Impuls von allen Impulspaaren zugeführt werden, wobei der Integrator durch den zweiten Impuls jeweils auf Null zurückgesetzt wird und das Ausgangssignal des Integrators zum Zeitpunkt des nächstfolgenden ersten Impulses abgetastet wird, und der Wert des abgetasteten Ausgangssignals bis zum Zeitpunkt des darauffolgenden ersten Impulses in einem Speicher abgespeichert wird, und daß der Ausgang des Speichers die Leistungsstufe des Motors steuert.

Die Kommutierungssignale können aus den Wicklungen selbst oder aus vorhandenen Gebern gewonnen werden. Vorteilhafterweise wird jeweils für eine Läuferumdrehung wenigstens ein Kommutierungssignal gewonnen.

Weitere vorteilhafte Ausgestaltungen der Erfindung sind in den Unteransprüchen enthalten und der nachfolgenden Beschreibung zu entnehmen.

Anhand der Zeichnung werden zwei Ausführungsbeispiele der Erfindung näher beschrieben, eine Ausführungsform in Analogtechnik, die andere in Digitaltechnik.

Gemäß dem Blockschaltbild nach Figur 1 wird ein mit 1 bezeichneter Elektromotor in üblicher Weise von einem Leistungsteil 2 angesteuert. Die Kommutierungssignale, die entweder aus den Motorwicklungen selbst oder aus ohnehin vorhandenen Gebern im Motor erhalten werden, werden, da sie in der Regel, wie in Figur 2 gezeigt, in Sinusform vorliegen, in einem Signalumformungsglied 3 in ein steilflankiges Rechtecksignal umgewandelt (Figur 3). Die Signalumformung kann in bekannter Weise mit Komparatoren, Diskriminatoren oder mittels Schmitt-Trigger erfolgen. Aus jeweils einer Flanke des Rechtecksignals werden in einem Impulsformerglied 4 zwei zeitlich versetzte Impulse $I_1$ und $I_2$ gewonnen (Figuren 4 und 5). Die Impulsbreite dieser beiden Impulse richtet sich nach der Verarbeitungszeit des Regelsystems und sollte so klein wie möglich sein. Dadurch, daß die Impulse aus den Kommutierungssignalen gewonnen werden, stellt der zeitliche Abstand der Impulse $I_1$, $I_2$ eine der Ist-Drehzahl des Motors entsprechende Größe dar. Der zeitlich spätere Impuls $I_2$ (Figur 5) wird einem Integrator 5 zugeführt, der zeitlich frühere Impuls $I_1$ steuert ein Abtastund Haltespeicher 6 an.

Eine dem Sollwert entsprechende elektrische-Größe, z.B. in Form von Strom oder Spannung, wird von einem Sollwertgeber 7 dem Integrator 5 zugeführt, der mit dem zeitlich späteren Impuls $I_2$ in die Anfangsstellung gebracht wird. Am Ausgang des Integrators 5 entsteht so eine sägezahnförmige Spannung (Figur 6) mit der Periodendauer einer Ankerdrehung des Motors. Die Amplitude des Sägezahns ist dabei abhängig von dem eingegebenen Sollwert und der Istdrehzahl. Im Integrator 5 wird der Sollwert aus dem Sollwertgeber 7 über die Zeit zwischen den Impulsen (Impulspausen) von $I_2$ und $I_1$ integriert. Der Stand des Integrators wird zum Zeitpunkt $I_1$ abgefragt und im Speicher für die Dauer einer Motorumdrehung festgehalten. Der zeitlich frühere Impuls $I_1$ steuert dabei den Speicher 6 so, daß der Sägezahn etwa im Maximum abgetastet wird. Nach jeder Umdrehung des Ankers wird der Speicher 6 neu aktualisiert, d.h. er bekommt bei jeder Umdrehung den aktuellen Wert zugeführt. Dies ist ein wesentlicher Unterschied zu den bekannten Steuereinrichtungen.

Wie bereits erwähnt, ist die Amplitude des Sägezahns abhängig vom eingegebenen Sollwert und von der Ist-Drehzahl. Wird beispielsweise der Sollwert niedriger eingestellt, so ergibt sich ein flacherer Anstieg des Sägezahns, wie dies in dem mittleren Kurvenverlauf in Figur 6 dargestellt ist.

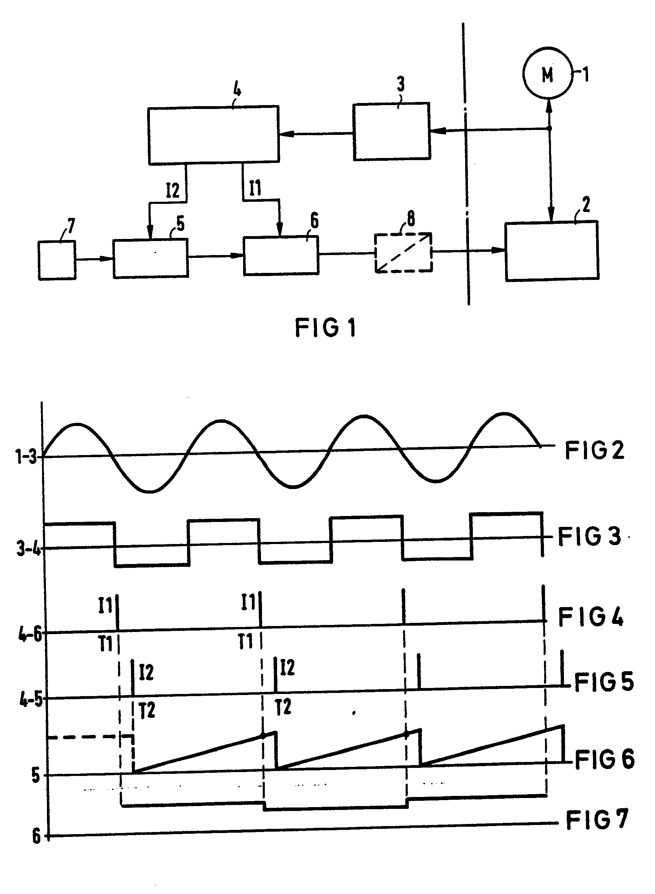

Die Signale am Speicherausgang, wie in Figur 7 dargestellt, sind unabhängig vom Absolutwert der Soll-Drehzahl; sie stellen vielmehr eine Aussage über das Maß der Abweichung des Istwertes vom Sollwert dar. Mit diesen Signalen läßt sich bei analoger Ausführung die Leistungsstufe 2 direkt ansteuern; bei digitaler Ausführung ist ein in der Darstellung nach Figur 1 gestrichelt eingezeichneter Digital-Analog-Wandler 8 vorzusehen.

Die vorbeschriebene Drehzahlregulierung kann mit analogen oder digitalen Bauelementen oder auch in Hybrid-Ausführung, d.h. in einer Kombination von analogen und digitalen Bauelementen, durchgeführt werden.

Bei digitaler Ausführung kann als Impulsformer 4 ein Zähler, z.B. ein Johnson-Zähler, vorgesehen werden. Die Funktion des Integrators 5 übernimmt bei der Digitalausführung ebenfalls ein Zähler, der mit dem Sollwert, repräsentiert durch eine extern erzeugte Frequenz, getaktet wird und der mit dem zeitlich späteren Impuls $I_2$ zurückgesetzt wird. Der Zähler wird zweckmäßigerweise für den Anlauf auf Null gesetzt und im Maximum angehalten. Der zeitlich frühere Impuls $I_1$ steuert den Digitalspeicher 6, der die Information aus dem Zähler vor dem Zurücksetzen übernimmt. Am Ausgang des Digitalspeichers 6 liegt dann ständig die Regelgröße im Binärcode des Zählers an und wird nach jeder Umdrehung des Motors aktualisiert. Die Differenzfrequenz zwischen Sollwert und Motorfrequenz kann im eingeschwungenen Zustand je nach Größe des Digitalspeichers 6 über die Ausgangsschnittstelle (strichpunktiert dargestellt) definiert werden. Wenn der Leistungsteil 2 in analoger Technik ausgeführt ist, ist ein Digital-Analog-Wandler mit Integrator (position 8) nachzuschalten.

Wesentliche Vorteile der erfindungsgemäßen Steuerschaltung sind, daß aus den Kommutierungssignalen des Motors ohne zusätzlichen Aufwand eine Regelgröße geliefert wird, die der Sollwertabweichung des Motors proportional ist. Im Prinzip können maximal so viele Messungen pro Umdrehung des Motors durchgeführt werden, als zur Kommutierung erforderliche Signalgeber im Motor vorhanden sind. Zweckmäßig ist jedoch, insbesondere um Fertigungstoleranzen bei der Positionierung der Geber auszuklammern, nur eine Messung pro Umdrehung des Ankers durchzuführen. Dadurch, daß die Information der Abweichung des Istwertes vom Sollwert für die Dauer einer Umdrehung abgespeichert und nach jeder Umdrehung des Motors aktualisiert wird, ergeben sich äußerst geringe Zeitkonstanten für den Regelkreis.

**Patentansprüche**

1. Elektronisch kommutierter Motor, insbesondere Kleinstmotor für den Antrieb zahnärztlicher Werkzeuge, mit einer Schaltungsanordnung, welche aus den vorhandenen Kommutierungssignalen eine Regelgröße zur Drehzahlregelung des Motors innerhalb eines relativ großen Drehzahlbereiches ableitet, dadurch gekennzeichnet, daß eine Einrichtung (4) vorhanden ist, welche aus wenigstens einem der vorhandenen Kommutierungssignale pro Läuferumdrehung ein Impulspaar ($I_1$, $I_2$) erzeugt, wobei die Zeitspanne zwischen dem zweiten Impuls ($I_2$) eines Impulspaares und dem ersten Impuls ($I_1$) des darauffolgenden Impulspaares dem Istwert der Motordrehzahl entspricht, daß ein Integrator (5) vorhanden ist, dem einerseits eine von einem Geber (7) vorgegebene und dem Sollwert der Motordrehzahl entsprechende elektrische Größe und andererseits der zweite Impuls ($I_2$) von allen Impulspaaren zugeführt werden, wobei der Integrator durch den zweiten Impuls ($I_2$) jeweils auf Null zurückgesetzt wird und das Ausgangssignal des Integrators zum Zeitpunkt des nächstfolgenden ersten Impulses ($I_1$) abgetastet wird, und der Wert des abgetasteten Ausgangssignals bis zum Zeitpunkt des darauffolgenden ersten Impulses ($I_1$) in einem Speicher (6) abgespeichert wird, und daß der Ausgang des Speichers die Leistungsstufe (2) des Motors (1) steuert.

2. Schaltungsanordnung nach Anspruch, 1, dadurch gekennzeichnet, daß bei sinusförmigen Kommutierungssignalen (Figur 2) diese mittels eines Umformergliedes (3) in Rechtecksignale (Figur 3) aufbereitet werden und daß die Impulspaare ($I_1$ und $I_2$) aus jeweils einer Flanke eines Rechtecksignals (Figur 3) gewonnen werden.

3. Schaltungsanordnung nach Anspruch 2, dadurch gekennzeichnet, daß die Ansteuerimpulse für Integrator (5) und Speicher (6) von einem Zähler (4) erzeugt werden, daß als Integrator ebenfalls ein Zähler (5) und als Speicher ein Digitalspeicher (6) vorgesehen sind und daß der Sollwert (7) durch eine extern erzeugte Frequenz gebildet wird, mit der der als Integrator dienende Zähler (5) getaktet wird.

4. Schaltungsanordnung nach Anspruch 3, dadurch gekennzeichnet, daß ein mit analogen Bauelementen aufgebautes Leistungsteil (2) vorgesehen ist und dem Digitalspeicher (6) ein Digital-Analog-Wandler (8) mit Integrator nachgeschaltet ist.

## Revendications

1. Moteur à commutation électronique, notamment moteur miniature pour l'entraînement d'outils de dentisterie, comportant un montage qui dérive, à partir des signaux de commutation existants, une grandeur de régulation pour la régulation de la vitesse de rotation du moteur à l'intérieur d'une plage relativement étendue de vitesses de rotation, caractérisé par le fait qu'il est prévu un dispositif (4), qui produit un couple d'impulsions ($I_1$,$I_2$) à partir d'au moins l'un des signaux de commutation existants lors de chaque rotation du rotor, l'intervalle de temps entre la seconde impulsion ($I_2$) d'un couple d'impulsions et la première impulsion ($I_1$) du couple d'impulsions suivant correspondant à la valeur réelle de la vitesse de rotation du moteur, qu'il est prévu un intégrateur (5), auquel sont envoyées, d'une part, une grandeur électrique prédéterminée par un transmetteur (7) et correspondant à la valeur de consigne de la vitesse de rotation du moteur, et, d'autre part, la seconde impulsion ($I_2$) de tous les couples d'impulsions, l'intégrateur étant ramené respectivement à zéro par la seconde impulsion ($I_2$), et le signal de sortie de l'intégrateur étant échantillonné à l'instant de la première impulsion immédiatement suivante ($I_1$) et la valeur du signal de sortie échantillonné étant mémorisée jusqu'à l'instant de la première impulsion immédiatement suivante ($I_1$), dans une mémoire (6), et que la sortie de la mémoire commande l'étage de puissance (2) du moteur (1).

2. Montage suivant la revendication 1, caractérisé par le fait que dans le cas de signaux sinusoïdaux de commutation (figure 2), ces signaux sont convertis en des signaux rectangulaires (figure 3) par l'intermédiaire d'un circuit de mise en forme (3) et que les couples d'impulsions ($I_1$ et $I_2$) sont obtenus à partir respectivement d'un flanc d'un signal rectangulaire (figure 3).

3. Montage suivant la revendication 2, caractérisé par le fait que les impulsions de commande pour l'intégrateur (5) et la mémoire (6) sont produites par un compteur (4), qu'il est également prévu, comme intégrateur, un compteur (5) et, comme mémoire, une mémoire numérique (6) et que la valeur de consigne (7) est formée par une fréquence produite de l'extérieur et avec laquelle le compteur (5) utilisé comme intégrateur est commandé de façon cadencée.

4. Montage suivant la revendication 3, caractérisé par le fait qu'il est prévu une partie de puissance (2) constituée par des composants analogiques et qu'un convertisseur numérique/ analogique (8) muni d'un intégrateur est branché en aval de la mémoire numérique (6).

## Claims

1. Electronically commutated motor, more particularly, sub-fractional-horsepower motor for the drive of dental tools, having a circuit arrangement which derives from the present commutation signals a regulating variable for the speed regulation of the motor within a comparatively large speed range, characterised in that a device (4) is provided, which device produces a pulse pair ($I_1$, $I_2$) from at least one of the present commutation signals per rotor revolution, the time interval between the second pulse ($I_2$) of a pulse pair and the first pulse ($I_1$) of the subsequent pulse pair corresponding to the actual value of the motor speed, in that an integrator (5) is provided, to which integrator, on the one hand, there is supplied an electrical quantity, which is preset by a transmitter (7) and which corresponds to the rated value of the motor speed, and, on the other hand, there is supplied the second pulse ($I_2$) of all the pulse pairs, the integrator being reset to zero in each case by the second pulse ($I_2$) and the output signal of the integrator being scanned at the instant of the next first pulse ($I_1$) and the value of the scanned output signal being stored in a memory (6) up to the instant of the subsequent first pulse ($I_1$), and in that the output of the memory controls the power output stage (2) of the motor (1).

2. Circuit arrangement according to claim 1, characterised in that in the case of sinusoidal commutation signals (Figure 2), the latter are processed by means of a transformer element (3) into rectangular signals (Figure 3) and in that the pulse pairs ($I_1$ and $I_2$) are obtained from, in each case, one edge of a rectangular signal (Figure 3).

3. Circuit arrangement according to claim 2, characterised in that the trigger pulses for integrator (5) and memory (6) are produced by a counter (4), in that a counter (5) is likewise provided as integrator and a digital memory (6) is provided as memory and in that the rated value (7) is established by means of an externally produced frequency with which the counter (5), serving as integrator, is clocked.

4. Circuit arrangement according to claim 3, characterised in that a power output part (2), which is set up with analog components, is provided and a digital-analog converter (8) with integrator is subsequently connected to the digital memory (6).

FIG 1

FIG 2

FIG 3

FIG 4

FIG 5

FIG 6

FIG 7